# EUROPÄISCHE PATENTANMELDUNG

(11) **EP 0 571 628 A1**
(43) Veröffentlichungstag der Anmeldung: **01.12.1993**
(21) Anmeldenummer: 92903394.2
(22) Anmeldetag: 20.11.1991
(51) Int. Cl.: C22C 1/05, C22C 9/04, C22C 26/00, B24D 3/06

(54) **REIBUNGSVERRINGERTES MATERIAL**

(71) Anmelder: YASCHENKO, Nikolai Konstantinovich, Kiev, 252209 (SU); OGORODNIK, Vladimir Vasilievich, Kiev, 252205 (UA)
(72) Erfinder: YASCHENKO, Nikolai Konstantinovich, Kiev, 252209 (SU); OGORODNIK, Vladimir Vasilievich, Kiev, 252205 (UA)
(74) Vertreter: Hansen, Bernd, Dr. Dipl.-Chem.
(86) Internationale Anmeldenummer: SU9100235
(87) Internationale Veröffentlichungsnummer: WO9310272

(57) **Zusammenfassung**

Antifriktionsmaterial auf Basis von Intermetalliden von Kupfer, Zink und Zinn als CuZn, CuSn und CuZnSn, das von 48,0 bis 88,0 Vol.-% CuZn; von 0,5 bis 3,0 Vol.-% CuSn; von 1,0 bis 4,0 Vol.-% CuZnSn und von 5,0 bis 50,0 Vol.-% Diamantenpulver mit Korngröße unter 0,1 µm enthält.

## Beschreibung

### Technisches Gebiet

Die Erfindung betrifft Zusammensetzungen von Schmierstoffen und bezieht sich insbesondere auf ein Antifriktionsmaterial.

### Zugrundeliegender Stand der Technik

Es ist bekannt, daß bei Bearbeitung von Metallerzeugnissen, wie Vorrichtungs- und Maschinenelementen, ein aus Mikrohöhlungen, "Ebenen" und Mikroerhöhungen bestehendes Mikrorelief auf der zu bearbeitenden Fläche gebildet wird. Durch dieses Mikrorelief wird die Verschleißbeständigkeit von erwähnten Elementen bei ihrem Kontaktzusammenwirken negativ beeinflußt. Zwecks Verminderung der Reibung zwischen den zusammenwirkenden Flächen, z.B. von Einzelteilen und Baugruppen, wobei die Flächen durch "Graten" von Mikroerhöhungen zerstört werden, werden die Reibflächen mit unterschiedlichen Schmierstoffen, Verbundstoffen, insbesondere mit Antifriktionsmaterialien, behandelt. Diese Antifriktionsmaterialien füllen die Mikrohöhlungen und ebnen so die Flächen. Dabei wird das Antifriktionsmaterial als dritter Körper in Reibungspaaren benutzt, der die Verringerung des Reibungsbeiwertes und den Oxidationsschutz der Reibungsflächen sichert.

So z.B. ist es bekannt, daß ein Metall, dessen Härte unter der des Werkstoffes der zu bearbeitenden Fläche liegt, in Verbindung mit einem Antifriktionsbestandteil wie Graphit und/oder Molybdändisulfid und/oder Bornitrid benutzt wird. Außer der genannten Zusammensetzung wird dabei ein Gemisch von einem filmbildenden Stoff, wie Firnis oder erstarrendes Polymer, und Blei und/oder Bleimennige benutzt. Der filmbildende Stoff trägt zum Festhalten des Antifriktionsbestandteiles auf Reibungsflächen bei (SU-A-988530).

Die genannte Zusammensetzung sichert die Gratbeständigkeit der behandelten Flächen, die im Zeitabschnitt bis zum "Graten" in Reibmaschinen gemessen wird und 26 Sekunden nicht überschreitet.

Somit läßt die bekannte Zusammensetzung eine Verminderung des Reibungsbeiwertes des Reibungspaares nur im Anfangsstadium seines Betriebes zu, weil während des Betriebsvorganges lokale Kontaktübertemperaturen unausweichlich entstehen, die zum Zerstören (Dissoziation) von organischen und polymerenthaltenden Bindestoffen und darauffolgender Beseitigung von metallenthaltenden Komponenten des Antifriktionsmaterials von Reibungsflächen führen.

Es ist auch bekannt, daß ein Verbundwerkstoff benutzt wird, der von 40,0 bis 60,0 Vol.-% durch Sintern gefertigter Metallverbindungen (Intermetalliden), wie z.B. Kupfer mit Aluminium, Zinn, deren Härte unter der des Metalls der zu bearbeitenden Fläche liegt; von 15,0 bis 25,0 Vol.-% Antifriktionswerkstoff, wie z.B. Graphit oder Molybdändisulfid; von 10,0 bis 30,0 Vol.-% Füllstoff, wie z.B. Eisen-, Aluminium-, Molybdänoxiden, sowie von 15,0 bis 35,0 Vol.-% Bindemittel, wie z.B. Phenolharze enthält (SU-A-916249).

Mit genanntem Verbundwerkstoff gelingt es, die Reibung zwischen Berührungsflächen, die ihre Zerstörung auslöst, herabzusetzen, wobei die Gratbeständigkeit der behandelten Fläche von 41 Sekunden gesichert wird. Obengenannte erreichbare Gratbeständigkeit erklärt sich damit, daß dieser Verbundwerkstoff durch niedrige Oxidationsbeständigkeit gekennzeichnet wird, und beim Betrieb des Reibungspaares bei erhöhter Temperatur sekundäre Gefüge als Metalloxide entstehen, die eine große Porosität und Lockerheit aufweisen, wodurch einsetzendes Antifriktionsmaterial kurzfristig abgenutzt wird. Außerdem entsteht wegen des Zinngehaltes von ca. 10,0 Vol.-% eine sehr spröde δ-Phase der Metallverbindungen, wodurch der Massentransport des Antifriktionsverbundwerkstoffes erschwert wird.

### Offenbarung der Erfindung

Der beanspruchten Erfindung liegt die Aufgabe zugrunde, durch Einführen von hochplastischen und wärmeoxidationshochbeständigen Verbindungen ein Antifriktionsmaterial herzustellen, das die Reibungsbeiwertherabsetzung und hohe Verschleißbeständigkeit von Reibungspaaren sichert.

Erfindungsgemäß wird diese Aufgabe dadurch gelöst, daß das Antifriktionsmaterial, das ein Intermetallid von Kupfer und Zinn einschließt, zusätzlich das Diamantenpulver mit Korngröße unter 0,1 µm und ein Intermetallid von Kupfer und Zink und ein Intermetallid von Kupfer, Zink und Zinn enthält, wobei sämtliche Intermetallide in der alpha-Phase sind und folgende Zusammensetzung in Vol.-% haben:

| | |
|---|---|
| CuZn | von 48,0 bis 88,0 |
| CuSn | von 0,5 bis 3,0 |
| CuZnSn | von 1,0 bis 4,0 |
| Diamantenpulver | von 5,0 bis 50,0. |

Durch vorliegende Erfindung gelang es, den Reibungsbeiwert des Reibungspaares herabzusetzen, d.h. den Zeitabschnitt bis zum "Graten" auf 110-112 Sekunden zu verlängern, und die Verschleißbeständigkeit beträchtlich zu erhöhen (Motorstunden eines 25 PS-Verbrennungsdieselmotors, der mit dem Antifriktionsmaterial gemäß vorliegender Erfindung versehen wurde, betragen 18.000-20.000 Stunden im Vergleich mit 6.000-8.000 Motorstunden ohne Anwendung dieses Antifriktionsmaterials).

Gemäß der beanspruchten Erfindung ist es zweckmäßig, daß das Antifriktionsmaterial folgende Mengen von Bestandteilen in Vol.-% enthält:

| | |
|---|---|
| CuZn | von 75,0 bis 88,0 |
| CuSn | von 2,0 bis 3,0 |
| CuZnSn | von 3,0 bis 4,0 |
| Diamantenpulver | von 5,0 bis 20,0 |

und daß das Antifriktionsmaterial folgende Zusammensetzung in Vol.-% hat:

| | |
|---|---|
| CuZn | 75,0 |
| CuSn | 2,0 |
| CuZnSn | 3,0 |
| Diamantenpulver | 30,0. |

Nachfolgende Ziele und Vorteile der beanspruchten Erfindung werden anhand folgender ausführlicher Beschreibung des Antifriktionsmaterials und konkreter Ausführungsbeispiele näher erläutert.

Das Antifriktionsmaterial gemäß der Erfindung stellt nach einem pulvermetallurgischen Verfahren gesinterte Intermetallide von Kupfer, Zink und Zinn als CuZn, CuSn und CuZnSn in der alpha-Phase in folgenden Mengen (Vol.-%) dar:

| | |
|---|---|
| CuZn | von 48,0 bis 88,0 |
| CuSn | von 0,5 bis 3,0 |
| CuZnSn | von 1,0 bis 4,0 |
| Diamantenpulver | von 5,0 bis 50,0. |

Kupfer, Zink und Zinn in angegebenen Mengen lassen weiche Intermetallide in der alpha-Phase bilden, durch die die Mikrohöhlungen gefüllt und die Kontaktflächen der Reibungspaare geebnet werden.

Gemäß der beanspruchten Erfindung liegt die Korngröße von Diamantenpulver unter 0,1 µm.

Das Vorhandensein von Diamanten im Antifrkitionsmaterial gemäß der beanspruchten Erfindung läßt das durch die genannten Intermetallide gebildete Werkstoffgefüge zuverlässig armieren. Durch niedrigsten Reibungsbeiwert und hohe Wärmeleitfähigkeit von Diamanten wird eine einschneidende Herabsetzung des Reibungsbeiwertes und eine Vergrößerung der Geschwindigkeit der Wärmestreuung in der Berührungszone des Reibungspaares gesichert.

Durch gleichartige Verteilung von Diamantenteilchen im Antifriktionsmaterial, deren Korngröße (unter 0.1 µm) mit größter Rauhigkeit der Berührungsflächen nicht kommensurabel ist, wird das Entstehen eines abrasiven Effektes ausgeschlossen.

Bei Vorhandensein von Diamantenteilchen im erfindungsgemäßen Antifriktionsmaterial, deren Korngröße die angegebene übersteigt, wird die Abnutzung der Reibungsflächen um so mehr beschleunigt, je größer die Korngröße von Diamantenteilchen ist.

Somit wird durch das Vorhandensein im erfindungsgemäßen Antifriktionsmaterial von Diamantenteilchen mit Korngröße unter 0,1 µm dem Reibungsbeiwert von Diamanten näher gebracht.

Gemäß der Erfindung enthält das Antifriktionsmaterial von 5,0 bis 50,0 Vol.-% Diamantenpulver. Wenn die Menge von Diamantenpulver im Antifriktionsmaterial 50,0 Vol. -% übersteigt, verliert das Antifriktionsmaterial seine Plastizität vollständig und bekommt die Gestalt einer spröden Schüttmasse, die dem Massentransport nicht unterliegt. Wenn der Gehalt von Diamantenteilchen unter 5,0 Vol.-% liegt, wird der aufgezeichnete Effekt der Einführung des Diamantenpulvers nicht erreicht.

Das beanspruchte Antifriktionsmaterial wird nach einem in der Pulvermetallurgie üblichen Verfahren aus Möller (metallisches Kupfer-, Zink- und Zinnpulver) hergestellt, durch dessen Mengengehalt an Komponenten die Bildung von Intermetalliden (d.h. CuZn, CuSn, CuZnSn) in erfindungsgemäßen Verhältnissen nur in der alpha-Phase durch Sintern bei 750 ± 10°C sichergestellt wird.

Nur bei Vorhandensein von Intermetalliden von Kupfer, Zink und Zinn in erfindungsgemäßen Verhältnissen wird die Plastizität des Antifriktionsmaterials gesichert.

Das erfindungsgemäße Antifriktionsmaterial weist hohe Plastizität, niedrige Härte (HB 30-50) sowie hohe Thermooxidationsbeständigkeit auf. Durch genannte Eigenschaften bei Benutzung dieses Materials wird eine Herabsetzung des Reibungsbeiwertes in den Berührungsteilpaaren, d.h. eine Verlängerung des Zeitabschnittes bis zum "Graten" auf 110-112 Sekunden, sowie ihre hohe Verschleißbeständigkeit (Motorstunden eines 25 P.S.-Verbrennungsdieselmotors betragen 18.000-25.000 Stunden) gesichert. Dabei werden innere Reibungsverluste des Ring-Buchsen-Paares um 25 bis 30 v.H. und Motorölabbrand um 5 v.H. vermindert. Die Kraftstoffeinsparung beträgt von 0,5 bis 1,0 g/PS.

### Bevorzugte Ausführungsform der Erfindung

Das Antifriktionsmaterial enthält von 75,0 bis 88,0 Vol.-%, vorzugsweise 75,0 Vol.-% CuZn; von 0,5 bis 3,0 Vol.-%, vorzugsweise 2,0 Vol.-% CuSn; von 3,0 bis 4,0 Vol.-%, vorzugsweise 3,0 Vol.-% CuZnSn und von 5,0 bis 20,0 Vol.-%, vorzugsweise 20,0 Vol.-% Diamantenpulver mit Korngröße unter 0,1 µm.

Zum besseren Verständnis dieser Erfindung werden ihre konkreten Ausführungsbeispiele angeführt.

### Beispiel 1

Das Antifriktionsmaterial auf Basis von Intermetalliden von Kupfer, Zink und Zinn, das 88,0 Vol.-% CuZn, 3,0 Vol.-% CuSn, 4,0 Vol.-% CuZnSn und 5,0 Vol.-% Diamantenpulver mit Korngröße unter 0,1 µm enthält, die im Material gleichartig verteilt sind, wird durch Pressen eines Gemisches von pulverförmigem Kupfer, Zink, Zinn und Diamantenpulver hergestellt und zwar in solchen Mengen, daß die genannte Zusammensetzung des Antifriktionsmaterials gesichert wird. Es werden Stäbe mit Abmessungen von 125x8x6 mm gepreßt, die danach in einem Wasserstoffofen im Wasserstoffmedium bei 750 ± 10°C gesintert werden.

An einer Ziehschleifmaschine werden Zylinderblockbuchsen eines Verbrennungsmotors mit gesinterten Stäben des Antifriktionsmaterials gerieben.

Die mit dem Antifriktionsmaterial behandelten Buchsen werden an einer Reibungsmaschine geprüft.

Die Gratbeständigkeit der mit dem Antifriktionsmaterial behandelten Fläche wird durch den Zeitabschnitt bis zum Graten bestimmt. Der vorhandenen Methodik nach ist das Erreichen der Kontakttemperatur im Berührungsbereich der Prüfmaschinenrolle und des Prüfteils, deren Wert für Graten und Eindruckbildung im Körper des Prüfteiles kennzeichnend ist, ein Merkmal des Grates. Nach Tiefe des Eindrucks schließt man auf Abnutzungsgrad und Reibungsbeiwert. Die Abnutzungseindrücke an geprüfter Arbeitsfläche der Buchse erkennt man sogar bei Erreichen der Kontakttemperatur, die durch dauernde Reibung der Reibmaschinenrolle an Prüfteil entsteht. Nochmalige Prünfung, die nach Senkung der Temperatur durchgeführt wurde, indem der Berührungsbereich von Rolle und Buchse nicht geändert wurde, wiederholt das Ergebnis der vorigen Prüfung.

In diesem Beispiel beträgt die Gratbeständigkeit der Reibungsfläche 85 Sekunden.

### Beispiel 2

Unter Bedingungen, die den im Beispiel 1 angegebenen analog sind, wird das Antifriktionsmaterial auf Basis von Intermetalliden von Kupfer, Zink und Zinn hergestellt, das 85,0 Vol.-% CuZn; 2,0 Vol.-% CuSn; 3,0 Vol.-% CuZnSn und 10,0 Vol.-% Diamantenpulver mit Korngröße unter 0,1 µm enthält.

Die durch genanntes Antifrikationsmaterial gesicherte Gratbeständigkeit, die unter den im Beispiel 1 angegebenen Bedingungen bestimmt wurde, beträgt 108 Sekunden.

### Beispiel 3

Unter Bedingungen, die den im Beispiel 1 angegebenen analog sind, wird das Antifriktionsmaterial auf Basis von Intermetalliden von Kupfer, Zink und Zinn hergestellt, das 75,0 Vol.-% CuZn; 2,0 Vol.-% CuSn; 3,0 Vol.-% CuZnSn und 20,0 Vol.-% Diamantenpulver mit Korngröße unter 0,1 µm enthält.

Die durch genanntes Antifriktionsmaterial gesicherte Gratbeständigkeit, die unter den im Beispiel 1 angegebenen Bedingungen bestimmt wurde, beträgt 110 Sekunden.

### Beispiel 4

Unter Bedingungen, die den im Beispiel 1 angegebenen analog sind, wird das Antifriktionsmaterial auf Basis von Intermetalliden von Kupfer, Zink und Zinn hergestellt, das 66,0 Vol.-% CuZn; 1,5 Vol.-% CuSn; 2,5 Vol.-% CuZnSn und 30,0 Vol.-% Diamantenpulver mit Korngröße unter 0,1 µm enthält.

Die durch genanntes Antifriktionsmaterial gesicherte Gratbeständigkeit, die unter den im Beispiel 1 angegebenen Bedingungen bestimmt wurde, beträgt 112 Sekunden.

### Beispiel 5

Unter Bedingungen, die den im Beispiel 1 angegebenen analog sind, wird das Antifriktionsmaterial auf Basis von Intermetalliden von Kupfer, Zink und Zinn hergestellt, das 48,0 Vol.-% CuZn; 0,5 Vol.-% CuSn, 1,5 Vol.-% CuZnSn und 50,0 Vol.-% Diamantenpulver mit Korngröße unter 0,1 µm enthält.

Die durch genanntes Antifriktionsmaterial gesicherte Gratbeständigkeit, die unter den im Beispiel 1 angegebenen Bedingungen bestimmt wurde, beträgt 90 Sekunden.

### Beispiel 6

Unter Bedingungen, die den im Beispiel 1 angegebenen analog sind, wird das Antifriktionsmaterial auf Basis von Intermetalliden von Kupfer, Zink und Zinn hergestellt, das 48,5 Vol.-% CuZn; 0,5 Vol.-% CuSn; 1,0 Vol.-% CuZnSn und 50,0 Vol.-% Diamantenpulver mit Korngröße unter 0,1 µm enthält.

Die durch genanntes Antifriktionsmaterial gesicherte Gratbeständigkeit, die unter den im Beispiel 1 angegebenen Bedingungen bestimmt wurde, beträgt 86 Sekunden.

### Gewerbliche Anwendbarkeit

Die beanspruchte Erfindung wird im Maschinenbau, vorzugsweise im Fahrzeug- und Förderanlagenbau, bei Herstellung von Zylinderbuchsen für Verbrennungsmotore und anderen Baugruppen, deren Verschleiß mit ihrer Reibung verbunden ist, Anwendung finden.

## Patentansprüche

1. Antifriktionsmaterial, das Intermetallide von Kupfer und Zinn einschließt, dadurch gekannzeichnet, daß es Diamantenpulver, deren Korngröße unter 0,1 µm liegt, und Intermetallid von Kupfer und Zink und Intermetallid von Kupfer, Zink und Zinn zusätzlich enthält, wobei sämtliche Intermetallide in der alpha-Phase sind und folgende Zusammensetzung in Vol.-% haben:
| | |
|---|---|
| CuZn | von 48,0 bis 88,0 |
| CuSn | von 0,5 bis 3,0 |
| CuZnSn | von 1,0 bis 4,0 |
| Diamantenpulver | von 5,0 bis 50,0. |

2. Antifriktionsmaterial nach Anspruch 1, dadurch gekennzeichnet, daß es enthält (in Vol.-%):
| | |
|---|---|
| CuZn | von 75,0 bis 88,0 |
| CuSn | von 2,0 bis 3,0 |
| CuZnSn | von 3,0 bis 4,0 |
| Diamantenpulver | von 5,0 bis 20,0. |

3. Das Antifriktionsmaterial nach Ansprüchen 1 und 2, dadurch gekennzeichnet, daß es 75,0 Vol.-% CuZn; 2,0 Vol.-% CuSn; 3,0 Vol.-% CuZnSn und 20,0 Vol.-% Diamantenpulver enthält.
